# EUROPÄISCHE PATENTSCHRIFT

(11) **EP 0 592 355 B1**
(45) Veröffentlichungstag und Bekanntmachung des Hinweises auf die Patenterteilung: **14.08.1996**
(21) Anmeldenummer: 93710019.6
(22) Anmeldetag: 05.10.1993
(51) Int. Cl.: B65G 47/91, B66C 1/02, B25B 11/00

(54) **Vorrichtung zum Ergreifen von Stückgut**
Device for gripping articles
Dispositif de préhension d'articles

(30) Priorität: 09.10.1992 DE 4234568
(43) Veröffentlichungstag der Anmeldung: 13.04.1994
(73) Patentinhaber: RO-BER INDUSTRIEROBOTER GmbH, D-59174 Kamen (DE)
(72) Erfinder: Severin, Hans-Gerd, Dr., D-58730 Fröndenberg (DE); Niestroy, Thomas, D-13467 Berlin (DE)

(56) Entgegenhaltungen:
- DE-A- 1 506 508
- DE-A- 3 232 937
- US-A- 3 411 641
- US-A- 4 693 458
- US-A- 4 892 296

## Beschreibung

Die Erfindung betrifft eine Vorrichtung zum Ergreifen von Stückgut, insbesondere quaderförmige Gegenstände, wie Umverpackungen oder Bücherpacken. Dabei wird ein Greifbereich dem Stückgut angepaßt.

In der US-Patentschrift US-A-4,693,458 wird eine Vorrichtung zum Ergreifen von Stückgut beschrieben, die aus einem dem Stückgut anpaßbaren Greifbereich besteht. Der Greifbereich besitzt mehrere paarige Öffnungen. Jede der Öffnungen ist durch eine Innenöffnung mit dem Unterdrucksystem und durch eine Außenöffnung mit dem Außenbereich verbunden. Weiterhin umfaßt die Vorrichtung ein Unterdrucksystem, welches über den anpaßbaren Greifbereich mit dem Außenbereich verbunden ist. Ebenfalls besitzt die Vorrichtung ein den Greifbereich steuerndes Sensorelement. Dabei sind die Außenöffnungen mittels des Sensorelementes steuerbar. Das Sensorelement ist parallel zu den Öffnungen angeordnet. Insbesondere ist die vorbeschriebene Vorrichtung zur Aufnahme von Holz in einem Sägewerk vorgesehen. Die vorgeschnittenen Holzquader werden von einem Sensorelement bezüglich ihrer Höhe erfaßt. Das Sensorelement wird von einer Vielzahl kontaktloser Sensoren gebildet. Die Sensoren geben Signale ab, welche die Öffnungen mittels Ventile steuern. Dabei liegen je zwei Öffnungen und ein korrespondierender Sensor auf einer horizontalen Ebene. Der Sensor besitzt eine Lichtschranke, eine photoelektrisches Element oder eine Lasersteuerung. Die einzelnen Öffnungen weisen Dichtungsringe auf, die ein Ergreifen der Holzquader ermöglichen sollen. Wesentlich ist, daß die Sensoren statisch befestigt sind und kontaktlos gegenüber dem Stückgut sind.

Nachteilig bei dieser Vorrichtung ist, daß sie streng an genormtes Stückgut gebunden ist. Weichen die Holzquader von der idealen Form ab, ergeben sich beim Ergreifen der Quader Probleme. Aufgrund des speziellen Einsatzes besitzen die Holzquader eine in etwa einheitliche Normgröße. Es ist Aufgabe, daß die Vorrichtung keine Greifspuren an den Holzquadern hinterläßt. Das Zusammenarbeiten der Sensorelemente und der Ventile erfordert eine komplizierte Schaltung. Ein Verdrecken der Lichtschranken ist in der Umgebung, in der die Vorrichtung verwendet wird, leicht möglich.

Neben diesem Stand der Technik ist aus der deutsche Offenlegungsschrift DE-A-22 07 836 eine Vorrichtung zum Ergreifen bekannt, bei der ein Greifbereich eine Ansaugoberfläche bildet. Dieser Greifbereich weist kreisrunde Saugelement auf, die mit einem Unterdrucksystem verbunden sind. Der Greifbereich ist variabel, da Sensorelemente die Ausmaße des Stückgutes erfassen und die entsprechende Anzahl an Saugelementen aktiviert. Dabei wirkt das Unterdrucksystem auf die Saugelemente ein, indem ein Saugelementventil durch die Sensorelemente motorisch gesteuert wird.

Eine solche Vorrichtung wird zur Aufnahme und Ablage von Gegenständen verwendet. Dabei ist der Greifbereich variabel, indem so viele Saugelemente einen Unterdruck ausbilden, wie Sauger den zu transportierenden Gegenstand überlappen.

Nachteilig bei dieser Vorrichtung ist, daß sie sehr träge einen Unterdruck im Saugelement aufbaut. Solche Greifer erfordern hohe Pumpleistungen, da leicht Porösität oder Rauhigkeit der Oberfläche des zu transportierenden Stückgutes eine Fehlluftmenge verursacht. Die motorische Einstellung der Saugelemente erfolgt erst nach dem Kontakt des Sauggreifers mit dem Stückgut. Das Zusammenwirken von Sensorelement und Ventilen ist kompliziert und erfordert Zeit zum Bewegen der Ventile.

Aus der US-Patentschrift US-A-4,252,497 ist ein Greifbereich bekannt, der aus einer Vielzahl runder Saugelemente besteht. Diese Saugelemente werden durch Ventile je nach Größe des Stückgutes gesteuert, wobei Sensorelemente die Größe erfassen. Die Steuerung erfolgt durch Freigabe eines Ventils, das vier nebeneinander liegende Saugelemente mit dem Unterdrucksystem verbindet.

Die Nachteile dieser Vorrichtung sind mit denen der Vorrichtung aus der DE-A-22 07 836 vergleichbar. Die Steuerung der Ventile ist darüber hinaus umständlich und aufwendig.

Die deutsche Offenlegungsschrift DE-A-31 01 864 beschreibt eine Vorrichtung, deren einzelne Saugelemente je mit einem Ventil gesteuert werden. Das Ventil wird aufgrund eines Kontaktes zwischen dem aufzugreifenden Stückgut und dem Saugelement gesteuert. Wenn das Stückgut das Saugelement berührt, wird ein federndes Sensorelement in Form eines Stiftes, der direkt mit dem Ventil verbunden ist, in Richtung der Vorrichtung gedrückt. Dadurch wird das Ventil freigegeben. Die Verbindung zwischen Unterdrucksystem und Saugelement wird hergestellt.

Nachteilig sind rauhe Oberflächen des zu ergreifenden Stückguts. Aufgrund der kleinen Strömungsquerschnitte sind diese Vorrichtungen störanfällig. Auch ist die Vorrichtung nicht in der Lage, sich auf die unterschiedliche Dichte des Stückguts einzustellen, da der fixe Querschnitt der Ventile, der Saugelemente und der konstante Federdruck des Stiftes einen eingeschränkten Arbeitseinsatz erlauben.

In der deutschen Offenlegungsschrift DE-A-40 28 298.8 wird eine Vorrichtung beschrieben, bei der ein Greifbereich dem Stückgut manuelle angepaßt wird. Die Vorrichtung besitzt ein Unterdrucksystem, das über Außenöffnungen mit dem Außenbereich verbunden ist. Die Größe der Außenöffnungen wird durch einen vorhangartigen Schieber eingestellt. Der Schieber besitzt in seinem unteren Bereich einen Dichtungsteil in Form einer Dichtungsleiste, während der untere horizontale Bereich des Greifbereichs mit einem Dichtelement in Form einer Dichtlippe versehen ist.

Nachteilig ist, daß die Größe des Greifbereichs manuell verändert werden muß. Lediglich eine Größe von Stückgut ist zu handhaben.

Es stellt sich somit die Aufgabe, Vorrichtungen der eingangs genannten Art dahingehend zu verändern, daß die Vorrichtung Stückgut mit unterschiedlicher Größe und Dichte ergreifen kann. Die Vorrichtung soll selbständig den Greifbereich auf das individuelle in Höhe oder Breite unterschiedlich ausgelegte Stückgut einstellen. Dabei soll die Einstellung schnell erfolgen, die Halterung soll griffsicher sein, und das Greifen soll für das Stückgut schonend sein.

Die Aufgabe wird durch eine Vorrichtung er eingangs genannten Art gelöst; dabei besteht die Vorrichtung
a) aus einem dem Stückgut anpaßbaren Greifbereich, der wenigstens zwei Öffnungen besitzt,
b) aus einem Unterdrucksystem, das über den anpaßbaren Greifbereich mit dem Außenbereich verbunden ist
c) und aus wenigstens einem den Greifbereich steuernden Sensorelement,
wobei jede Öffnung
(i) durch wenigstens eine Innenöffnung mit dem Unterdrucksystem und
(ii) durch wenigstens eine Außenöffnung mit dem Außenbereich
verbunden ist
und die Außenöffnung oder die Außenöffnungen mittels der Sensorelemente steuerbar ist/sind,
wobei das Sensorelement oder die Sensorelemente im wesentlichen parallel und/oder quer zu den Öffnungen angeordnet sind,
(aa) wobei die Öffnungen Kanäle (2) sind,
(bb) wobei die Sensorelemente (4 und/oder 22) gegenüber dem Greifbereich (1) bewegbar sind und
(cc) wobei das oder die Sensorelemente (4 und/oder 22) Tastvorrichtungen mit einer auf mechanischen Kontakt beruhenden Längenmessung sind, wodurch das oder die Sensorelemente (4 und/oder 22) die Größe und die Ausmaße des Stückgutes (12) erfassen.

Stückgut gemäß der Erfindung können die unterschiedlichsten Gegenstände sein. Besonders geeignet sind alle Gegenstände, die sich in einer quaderförmigen Umverpackung befinden oder die selbst quaderförmig sind. Dadurch ist es möglich, den Greifbereich planar zu gestalten. Hierdurch ergibt sich die Vorrichtungsausführung, die sicherlich am umfangreichsten eingesetzt werden kann. Aufgrund der hohen Packdichte und der günstigen Palettierung eignet sich die Verpackung als Quader besonders gut.

Jedoch ist es ebenso möglich, den Greifbereich nicht-planar zur gestalten. So ist eine tonnenförmige, konkav ausgebildete Form sinnvoll, besonders, wenn sie sich periodisch wiederholt. So können Bücherstapel mit unterschiedlicher Anzahl an Büchern gegriffen werden, da sich die konvexen Buchrücken in die Aussparungen im Greifbereich einpassen.

Die äußere Form des Stückgutes, das in beliebiger Anzahl transportiert wird, bestimmt, wie die jeweilige Ausgestaltung des Greifbereichs aussieht.

Besonders ökonomisch ist eine austauschbare Oberfläche des Greifbereichs. Auch ist denkbar, Dichtplatten auf dem Greifbereich anzubringen, die der Form des Stückguts einerseits entsprechen, andererseits jedoch auch geeignet sind, innerhalb eines Normbereichs sich an verschiedene Oberflächen der Stückgüter anzupassen.

Der Ausdruck "ergreifen" umfaßt den gesamten Greif- und Transportvorgang. Im Einzelnen bedeutet dieses ein Anlagern des Greifbereichs an das Stückgut, ein Kontaktieren des Greifbereichs an dem Stückgut durch Ausbildung des Unterdrucks. Dadurch bilden Vorrichtung und Stückgut eine transportable Einheit. Somit ist die Vorrichtung besonders geeignet, das Endstück eines Greifers oder eines Transportarms zu sein. Auch ist denkbar, die Vorrichtung Teil eines Schwebewagens oder eines bewegbaren Transportsystems auf Rädern oder auf einem Luftkissen sein zu lassen. Ebenso ist eine stationäre oder eingeschränkt bewegbare Vorrichtung denkbar, wobei das Stückgut auf Förderbändern, Laufbändern, Wagen, Luftkissenfahrzeugen oder anderen Vehikeln (Magnetschwebewagen) bewegt wird.

Die Einheit aus Stückgut und Vorrichtung kann mit Hilfe eines Greifers beliebig bewegt werden. Dabei wirkt das Unterdrucksystem direkt auf das Stückgut ein, da die Außenöffnungen lediglich im Greifbereich mit dem Stückgut geöffnet sind. Fehlluftmengen sind gering.

Prinzipiell ist es ohne Bedeutung, ob die Kanäle senkrecht oder waagerecht zu dem Stückgut verlaufen. Die erfindungsgemäße Vorrichtung erlaubt beide Anordnungen. Auch ist es möglich, daß die Vorrichtung das Stückgut seitlich oder von oben ergreift.

Die Anzahl der Kanäle ist durch die Ausmaße des Stückguts bedingt. In einer weiteren Ausführungsform wird darauf noch eingegangen werden.

Das Unterdrucksystem sollte an- und abstellbar sein, da durch Ausbildung des Unterdrucksystems der Ansaugvorgang für das Stückgut lediglich beginnt und aufrecht erhalten werden kann. Soll der Gegenstand wieder abgelegt werden, kann der Unterdruck abgebaut werden. Auch ist denkbar, die Außenöffnungen oder Innenöffnungen separat zu steuern, um das Unterdrucksystem zur Wirkung zu bringen oder unwirksam werden zu lassen. Dabei ist der Auf- und Abbau des Unterdrucks steuerbar. Der Unterdruck kann durch verschiedene bekannte Unterdruckpumpen erzeugt werden.

Die Sensorelemente sind Tastvorrichtungen mit einem Längenmeßverfahren, das auf mechanischen Kontakt und Längenmessungen beruht. Diese Sensorelemente erfassen die Größe und die Ausmaße des Stückguts.

Sinnvollerweise besitzen die Sensorelemente eine Voreinstellung, die elektronisch entsprechend der mittleren Größe des Stückguts eingestellt wird. Dadurch wird die Anpaßzeit der Sensorelemente und die Zeit der Steuerung der Außenöffnungen verringert. Auch ist es möglich, die Voreinstellung durch Meßkameras oder Fernlängenmeßgeräte zu ermitteln und daraufhin die Lage der Sensorelemente vorzugeben.

Die Vorrichtung kann ein oder zwei parallel arbeitende Sensorelemente besitzen. Wird nur ein Sensorelement verwendet, ist es sinnvoll, wenn die Vorrichtung durch Schaltungen gesteuert an vorgegebene Stellen bewegt wird. Dieses ist bei der Palletierung sehr einfach. Elektronische Steuerungen sind hierfür besonders geeignet. Datenbanken oder Meßkameras können dabei helfen, während der Annäherungsphase den Greifbereich in bezug auf das Stückgut vorzuorientieren.

Wichtiges Element dieser Vorrichtung sind längliche Systeme, nämlich die Kanäle, die eine Verbindung zwischen Unterdrucksystem über die Innenöffnung (en) und den Außenbereich über die Außenöffnung (en) herstellen.

Die Außenöffnung oder Außenöffnungen werden entweder direkt oder indirekt über die Sensorelemente gesteuert. Besonders groß dimensionierte Ventil- und Leitungsquerschnitte des Unterdrucksystems, der Kanäle und der Innen- und Außenöffnungen führen zu einem geringen Leitungswiderstand. Der Unterdruck wird schnell in den Kanälen aufgebaut. Die großen Querschnitte erfordern nur eine geringe Druckdifferenz. Stückgut mit hoher Dichte kann problemlos gehalten werden. Ein Verstopfen der Leitungen durch kleine Partikel ist nicht so leicht möglich.

Vorteilhaft ist eine erfindungsgemäße Vorrichtung, bei der das oder die Sensorelemente im wesentlichen quaderförmig sind.

Derartige quaderförmige Sensorelemente passen sich gerade den quaderförmigen Umverpackungen des Stückguts und quaderförmigem Stückgut selbst an, wodurch die Paßgenauigkeit beim Tastvorgang erhöht wird. Dadurch werden Fehlluftmengen vermieden, da Sensorelement und der Greifbereich aufeinander abgestimmt sind.

Bevorzugt ist eine erfindungsgemäße Vorrichtung, bei der das oder die Sensorelemente dichtend an dem Stückgut anliegen. Bei quaderförmigem Stückgut ist es dann vorteilhaft, wenn das oder die Sensorelemente im wesentlichen ein zu dem Stückgut weisende Fläche, die im wesentlichen senkrecht zum Greifbereich steht, besitzen.

Dadurch liegen das oder die Sensorelemente an dem Stückgut so an, daß sie die Funktion einer seitlich vom Greifbereich angeordneten Abdichtung übernehmen. Durch die seitliche Abstützung wird ein Verrutschen des Stückgutes aus dem Greifbereich vermieden. Diese Anordnung wird durch dem Sensorelement bezüglich des Greifbereichs gegenüberliegende Dichtelemente unterstützt, wenn ein Sensorelement vorliegt. Existieren zwei parallel angeordnete und parallel arbeitende Sensorelemente, so wird das Stückgut von den Sensorelementen an zwei gegenüberliegenden Flächen erfaßt.

Die Dichtfunktion des oder der Sensorelemente bewirkt bei dem Mehrfachgreifen quaderförmiger Körper, daß durch den seitlichen zum Greifbereich wirkenden Druck Fugen zwischen dem Einzelstückgut verschlossen werden, wodurch die Fehlluftmenge vermieden wird und auch die Soll-Lage korrigiert wird.

Wenn das oder die Sensorelemente, gegebenenfalls zusammen mit den Dichtelementen, die Haltefunktion erhöhen, so können auch biegeschlaffe Körper, wie Papierstapel oder gebundene Druckwerke, die dazu neigen, sich längs einer Kante von der Ansaugfläche lageweise zu lösen, zuverlässig abgestützt und durch zusätzliches Einspannen sicher gegriffen werden.

Dabei ist es nicht erforderlich, das oder die Sensorelemente mit Kraft gegen das Stückgut zu bewegen, da durch das Aufbauen des Unterdrucks auch die Sensoren in Richtung des Stückguts angesaugt werden.

Das oder die Sensorelemente können weiterhin durch eine Bewegung in Richtung des Stückguts dieses so justieren, daß ein sicheres Greifen problemlos erfolgen kann. Die Lage des Stückguts zum Greifbereich ist durch das oder die Sensorelemente korrigierbar.

Vorteilhaft ist eine erfindungsgemäße Vorrichtung, bei der das oder die Sensorelemente ein Größensensor oder Größensensoren sind und im wesentlichen senkrecht zu den Kanälen verlaufen und bei der (i) die Größe der Außenöffnung oder (ii) die Anzahl der Außenöffnungen pro Kanal durch den oder die Größensensoren steuerbar sind.

Werden zwei Größensensoren verwendet, liegen sie dem Greifbereich und dem darin gehaltenen Stückgut flankierend an. Die Aufgabe des oder der Größensensoren besteht darin, die Größe der Kanäle bezüglich ihres wirksamen Ansaugbereichs zu steuern. Ob die Kanäle eine durchgehende, längliche Außenöffnung oder eine Vielzahl kleiner Außenöffnungen, die nacheinander verschlossen und geöffnet werden können, besitzen, ist letztendlich nur eine Frage der individuellen Ausgestaltung. Beabsichtigt ist, eine gezielte Einstellung der Kanäle auf die Größe des Stückgutes zu ermöglichen.

Bei quaderförmigem Stückgut ist es vorteilhaft, wenn bei einer erfindungsgemäßen Vorrichtung die Außenöffnungen der Kanäle wenigstens von einer Seite vorhangartig verschließbar sind. Dabei kann der Vorhang aus Lamellen bestehen, die parallel zu der Außenöffnung verlaufen und vorzugsweise breiter als diese sind. Dieses ist der Fall, wenn die Kanäle voneinander getrennt sind. Bilden die Kanäle einen gemeinsamen Hohlraum, kann der Vorhang rechteckig und einstückig sein. Sollten zwei Größensensoren vorliegen, sind auch zwei vorhangartige Verschlußmechanismen erforderlich, die den Greifbereich von beiden Seiten begrenzen. Dadurch ist in einfacher Weise die für den Greifbereich relevante Fläche einstellbar. Die leichte Verstellbarkeit des Vorhangs ist gesichert, da erst bei dem Aufbauen des Unterdrucks der Vorhang an die Führungsstreben angedrückt wird. Der Vorhang braucht nicht direkt mit dem zum Greifbereich weisenden Sensorteil abzuschließen, vielmehr ist es sinnvoll, daß der Vorhang unter dem quaderförmigen Sensor endet, da dadurch auch der Sensor beim Aufbau des Unterdrucks in seiner Lage fixiert wird.

Eine weitere Ausführungsform der erfindungsgemäßen Vorrichtung besteht darin, daß das oder die Sensorelemente ein Anzahlsensor oder Anzahlsensoren sind, welche im wesentlichen parallel zu den Kanälen verlaufen, wobei die Anzahl der geöffneten Innenöffnungen durch den oder die Anzahlsensoren steuerbar ist.

Dieses erfolgt dadurch, daß ein Schieber in einer Steuerleitung des Unterdrucksystems verschiebbar ist und dabei eine Verbindung zwischen den Kanälen und dem Unterdrucksystem über die Innenöffnungen herstellt. Es ist weiterhin möglich, die Innenöffnungen durch getrennt steuerbare Ventile zu steuern, so daß die von dem oder den Anzahlsensoren ermittelte Distanz in eine Anzahl an zum Unterdrucksystem freigegebenen Innenöffnungen übertragen wird.

Diese Ausführungsform kann mit einer oder auch mit zwei Anzahlsensoren ausgestattet sein, wobei im Falle von zwei Anzahlsensoren beide sich gegenüberliegen und den Greifbereich begrenzen.

Bei bisherigen erfindungsgemäßen Ausführungsformen wurde davon ausgegangen, daß der Greifbereich in einer Dimension variabel ist. Dabei ist prinzipiell nicht von Bedeutung, ob die Höhe oder die Breite des Greifbereichs verändert werden kann. Auch ist die Vorrichtung geeignet, das Stückgut seitlich oder von oben zu erfassen.

Eine bevorzugte Ausführungsform der erfindungsgemäßen Vorrichtung besteht in einer Vorrichtung, bei der der oder die Größensensoren den Greifbereich in einer Dimension und der oder die Anzahlsensoren in einer weiteren zweiten Dimension steuern. Beide Dimensionen stehen im bevorzugten Fall im wesentlichen senkrecht aufeinander. Die Form des Stückguts kann einen anderen Winkel der beiden Dimensionen zueinander bedingen. Der Greifbereich kann dadurch zum Beispiel in der Breite mittels der Anzahlsensoren und in der Höhe durch die Größensensoren gesteuert werden.

Die Anzahlsensoren steuern die Anzahl der mit dem Unterdrucksystem verbundenen Kanäle durch z.B. Ventile oder Schieber, und die Größensensoren steuern die Größe der Außenöffnungen oder die Anzahl der Außenöffnungen pro Kanal durch zum Beispiel vorhangartige Verschlüsse oder Ventile.

Sollte je nur ein Anzahlsensor und nur ein Größensensor vorliegen, so sind auch die Verschlußmechanismen (Anzahlschieber oder vorhangartiger Verschluß) je in der Einzahl vorliegend.

Vorteilhaft ist es, wenn bei einzelnem Anzahlsensor und einzelnem Größensensor wenigstens einer neben seiner Bewegung senkrecht zur Sensorachse auch parallel zur Sensorachse bewegbar ist. Dieses bedeutet, daß beide Sensoren sich nicht in ihrem Bewegungsablauf behindern, sondern stets im wesentlichen im rechten Winken zueinander stehen. Die Begegnung parallel zur Sensorachse eines Sensors folgt der Bewegung senkrecht zur Sensorachse des anderen Sensors. So beeinflussen sich Anzahlsensoren und Größensensoren gegenseitig, so daß beide stets dichtend an dem Stückgut und dem Greifbereich anliegen. Dadurch wird die Greif- und Haltefunktion bei beiden Sensoren ermöglicht und andererseits eine Behinderung beider vermieden.

Eine weitere Ausführungsform der erfindungsgemäßen Vorrichtung besteht darin, daß das Unterdrucksystem mit einer Saug- und Druckleitung und gegebenenfalls mit dem umliegenden Bereich über steuerbare Ventile verbunden ist. Dieses hat den Vorteil, daß das Stückgut schnell von der Vorrichtung gelöst werden kann.

Eine weitere Ausführung erfaßt eine erfindungsgemäße Vorrichtung, bei der wenigstens eine Seite des Greifbereichs ein Dichtelement besitzt, das an der von den Sensorelementen nicht eingenommenen Seite angeordnet ist. Derartige Dichtelemente unterstützen das Aufbauen des Unterdrucks. Das Stückgut wird oben oder unten durch das Dichtelement gehalten, und das Stückgut wird in seiner Form stabilisiert, was bei flexiblem Material, zum Beispiel Druckprodukten, wünschenswert ist.

Eine weitere erfindungsgemäße Vorrichtung besteht darin, daß das oder die Dichtelemente als halbes Greifelement oder halbe Greifelemente ausgestaltet sind.

Dadurch wird die Halte- und Fixierungsfunktion des oder der Sensoren unterstützt, da der oder die Sensoren zusammen mit dem oder den Greifelementen je einen Greifer mit zwei Backen bilden. Dabei bildet ein Anzahlsensor mit einem Greifelement und/oder ein Größensensor mit einem Greifelement je einen Greifer.

Wesentlich bei allen erfindungsgemäßen Vorrichtungen ist, daß die mechanischen Funktionen durch eine Elektronik und durch Datenverarbeitung unterstützt werden. Dadurch wir die Zugriffszeit deutlich verkürzt. Die Elektronik sorgt bei Annäherung an das Stückgut für eine Vororientierung der Sensoren, so daß die Sensorelemente lediglich kleine Wege zurücklegen müssen, um das Stückgut korrekt zu berühren.

Verschiedene Ausführungsformen sind in den Zeichnungen dargestellt, wobei im einzelnen folgendes abgebildet ist.
- Figur 1: zeigt eine erfindungsgemäße Vorrichtung mit einem Größensensor in Vorderansicht.
- Figur 2: zeigt dieselbe Vorrichtung wie Figur 1 im Querschnitt, wobei ein Steg zwischen zwei Kanälen angeschnitten ist.
- Figur 3: zeigt dieselbe Perspektive wie die Figur 2, jedoch ist ein Kanal angeschnitten.
- Figur 4: zeigt dieselbe Vorrichtung wie in der Figur 2, jedoch wird eine Perspektive um 180° gedreht verwendet, wobei der Bewegungsmechanismus des Sensors und der vorhangartige Verschluß dargestellt sind.
- Figur 5: zeigt eine Vorderansicht einer zweiten Ausführungsform mit einem Anzahlsensor.
- Figur 6: zeigt eine Aufsicht auf die Vorrichtung in Figur 5.
- Figur 7: zeigt eine dritte Ausführungsform, die einen Größen- und einen Anzahlsensor besitzt.
- Figur 8: zeigt die Vorrichtung in der Figur 7 in Aufsicht.
- Figur 9: zeigt die Vorrichtung in der Figur 7 in Seitenansicht.
- Figur 10: zeigt eine vierte Ausführungsform, mit einem Größensensor und einem parallel zu seiner Achse verschliebbaren Anzahlsensor.

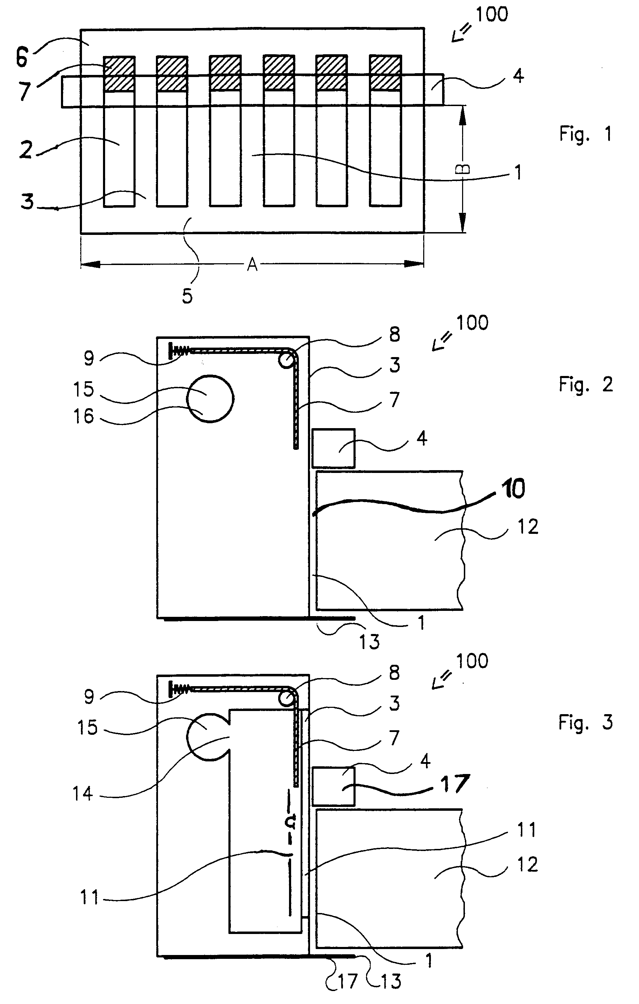

In der Figur 1 ist eine Vorrichtung 100 zu sehen, deren Greifbereich 1 durch die Abschnitte A und B gekennzeichnet ist. A repräsentiert die Breite, B die Höhe des Greifbereichs 1. Die Vorrichtung 100 besitzt sechs senkrechte Kanäle 2, die parallel angeordnet sind. Die Kanäle werden von fünf Stegen 3 getrennt.

Der Greifbereich 1 wird durch einen Größensensor 4 nach oben begrenzt, der ein länglicher, rechteckiger Quader ist. Der Größensensor ist vor den Stegen, die zusammen mit einem Unterrahmen 5 und einem Oberrrahmen 6 eine Fläche nach außen bilden, angeordnet. Hinter dem Größensensor 4 und durch die Stege 3 verdeckt, befindet sich ein Vorhang 7, der auf und ab bewegbar ist, wobei die Bewegung vertikal verlaufend durch den Größensensor 4 gesteuert wird. Der Vorhang besitzt Lamellen und weist eine Lamelle je Kanal auf. Jede Lamelle hat die Breite, eine Außenöffnung abzudichten.

In der Figur 2 ist dieselbe Vorrichtung von der Seite gesehen dargestellt. Die Vorrichtung 100 zeigt hier einen der senkrechten Kanäle 2 im Querschnitt, wobei die Schnittebene mittig einen der Stege 3 trifft. Die Kanäle sind durch Stege voneinander getrennt und weisen je eine Innenöffnung 14 (siehe Figur 3) zu einer alle Kanäle verbindenden Saug- und Druckleitung 15 auf. Hinter dem Steg 3, der zum Außenbereich 10 verbreitet ist, ist der Vorhang 7 angeordnet, der über eine Umlenkrolle 8 zu einer Feder 9 geführt wird. Der Vorhang wird durch den Größensensor 4 gesteuert.

Die Figur 3 zeigt eine weitere Sicht derselben Vorrichtung, wobei der Querschnitt durch eine der Außenöffnungen 11 verläuft. Dabei schaut der Betrachter auf einen der Stege 3, während die anderen Teile der Vorrichtung im Querschnitt abgebildet sind. Hier ist klar zu sehen, daß der Vorhang 7 unter dem Größensensor 4 zu liegen kommt, wodurch auch der Quader des Größensensors 4 an die Stege 3 gesaugt wird. Zuvor ist jedoch noch der Größensensor 4 an das Stückgut 12 bewegt und durch den Unterdruck angesaugt worden. Hierdurch werden Größensensor 4 und Dichtelement 13 als Greifer 17 wirksam.

Der Kanal besitzt in der Figur 2 und 3 auf der Seite zum Außenbereich 10 eine Außenöffnung 11, deren Höhe durch den Buchstaben C angegeben wird. Der Außenbereich ist in diesem speziellen Fall teilweise durch ein Stückgut 12 ausgefüllt. Das Stückgut liegt der Fläche an, die von den Stegen 3 und dem Unterrahmen 5 und dem Oberrahmen 6 gebildet wird. Es (das Stückgut) wird oben durch Größensensor 4 und unten durch ein Dichtelement 13, das zungenförmig ausgestülpt ist, eingerahmt und während des Transports fixiert. Auf der von der Außenöffnung 11 gegenüberliegenden Seite des Kanals 2 befindet sich die Innenöffnung 14, die mit der Saug- und Druckleitung 15 verbunden ist, welche ein Teil eines Unterdrucksystems 16 ist.

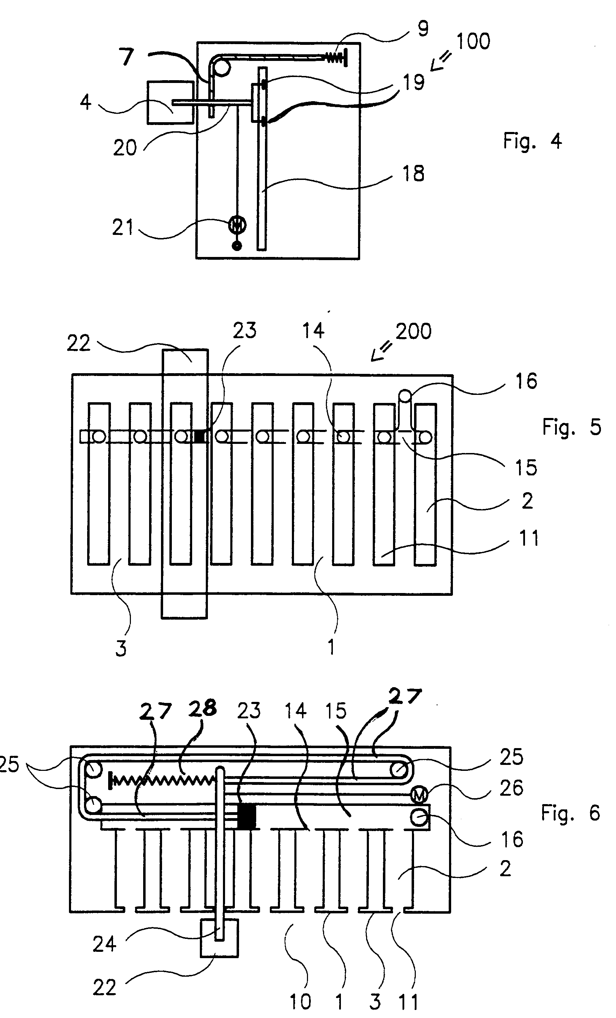

Figur 4 zeigt die Vorrichtung 100 unter Berücksichtigung der Steuerung des Vorhangs 7 durch den Größensensor 4. Dabei gleitet der Größensensor in einer Schiene 18, wobei zwei Gleiter 19 über eine Größenhalterung 20 mit dem Größensensor 4 verbunden sind. Die Größenhalterung ist mechanisch mit dem Vorhang 7 gekoppelt. Ein Größenmotor 21 steuert die Lage des Größensensors und des Vorhangs, wobei die Feder 9 eine Gegenkraft entwickelt.

Beim Annähern an das Stückgut 12 wird der Größensensor vororientiert. Er bewegt sich danach in Richtung des Stückguts auf Tastbewegung hin. Beim leichten Kontaktieren des Größensensors 4 am Stückgut 12 wird der Größenmotor 21 gestoppt und arretiert. Eine leichte Bewegung des Größensensors 4 zum Stückgut 12 ist jedoch aufgrund des Ansaugvorgangs noch erforderlich.

Figur 5 zeigt eine zweite Ausführungsform 200, die einen Anzahlsensor 22 besitzt, der in der Saug- und Druckleitung 15 einen Schieber 23 steuert. Der Schieber begrenzt die Saug- und Druckleitung 15 in der Figur 5 nach rechts. In diesem Teil der Leitung 15 wird das Unterdrucksystem 16 wirksam. Das Unterdrucksystem 16 ist über die Innenöffnungen 14 mit den Kanälen 2 verbunden. Nach vorne sind die Außenöffnungen 11 der Kanäle 2 zu sehen, wobei die Außenöffnungen durch die Stege 3 getrennt werden.

Die Figur 6 zeigt die Vorrichtung 200 (siehe Figur 5) im Längsschnitt, wobei der Steuermechanismus des Anzahlsensors 22 sichtbar wird. Der Anzahlsensor 22 gleitet ebenfalls in einer Schiene, wobei der Gleiter über eine Anzahlhalterung 24 mit dem Anzahlsensor 22 verbunden ist. Der Gleiter und die Schiene sind nicht abgebildet, sie sind jedoch analog zur Figur 4 ausgestaltet. Der Anzahlsensor 22 steuert den Schieber 23 über eine Vorrichtung, die doppel-U-förmig oder oval ausgebildet ist, wobei drei Umlenkrollen 25 ein ovales Gestänge 27 führen, an dessen einem Ende der Schieber 23 angeordnet ist. Eine Anzahlmotor 26 bewegt den Anzahlsensor 22 in Richtung des Stückguts (in der Figur 6 nach rechts). Dadurch wird auch der Schieber 23 nach rechts bewegt. Eine Feder 28 sorgt auch in diesem Fall für die Gegenkraft zu dem Anzahlmotor 26. In der Figur 6 ist weiterhin das Unterdrucksystem 16 dargestellt, das durch die Saug- und Druckleitung 15 mit der Innenöffnung 14 verbunden ist. Der Schieber 23 begrenzt die Anzahl an geöffneten Innenöffnungen 14 zu den Kanälen 2, die den Greifbereich 1 überlappen. Die Kanäle 2 selbst stehen über die Außenöffnungen 11 mit dem Außenbereich 10 in Kontakt.

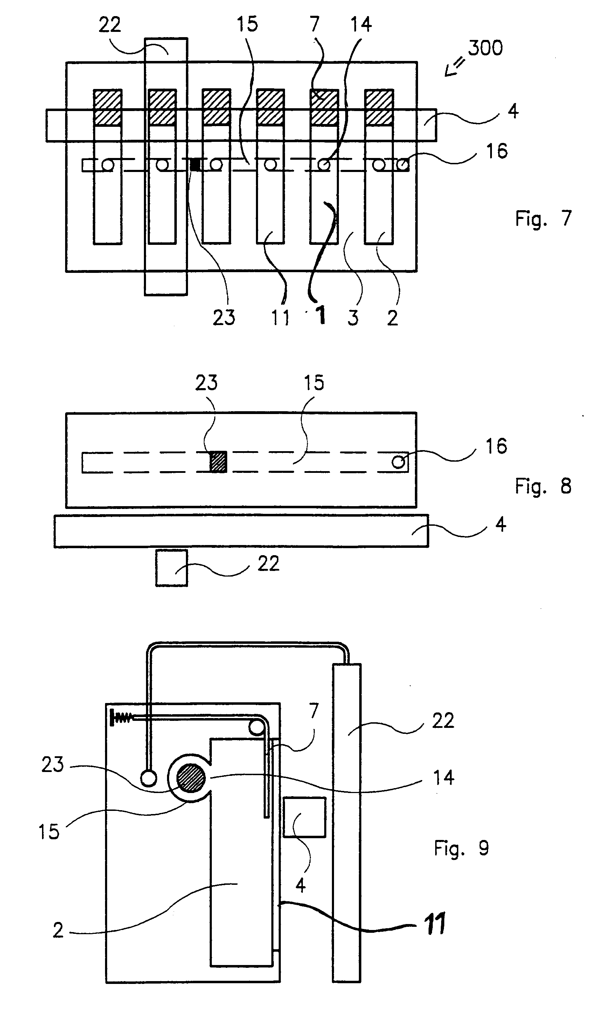

Die Figuren 7, 8 und 9 zeigen eine dritte Ausführungsform 300, die sowohl einen Größensensor 4 als auch einen Anzahlsensor 22 besitzt. Hier werden Elemente der Vorrichtungen 100 und 200 miteinander verbunden. Der Größensensor 4 steuert die Größe der Außenöffnungen 11 der Kanäle 2, die durch Stege 3 getrennt sind. Die Steuerung erfolgt über den Vorhang 7.

Der Anzahlsensor 22 steuert die Anzahl der Kanäle 2, die mit dem Unterdrucksystem 16 verbunden sind. Dabei wird analog zur Figur 6 über ein Gestänge 27 der Schieber 23 in der Saug- und Druckleitung 15 durch den Anzahlsensor 22 bewegt. Dadurch werden die Innenöffnungen 14, die den Greifbereich 1 überlappen, ausschließlich mit dem Unterdrucksystem 16 über die Saug- und Druckleitung 15 verbunden. Diese Vorrichtung ist die bevorzugte Ausführungsform.

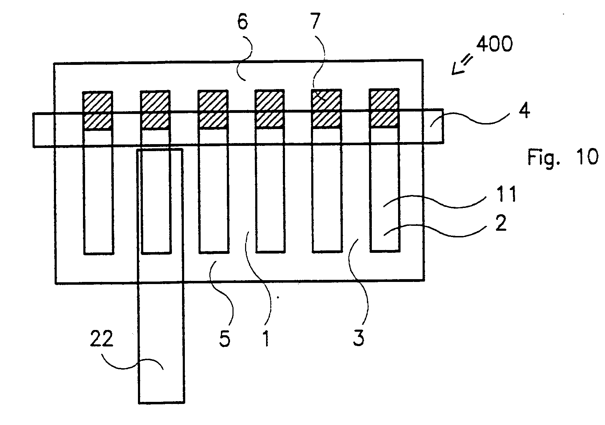

Die Figur 10 zeigt eine weitere vierte Ausführungsform 400, bei der der Anzahlsensor sowohl wie zuvor dargestellt horizontal hin und her als auch vertikal bewegt werden kann. Dieses hat den Vorteil, daß beide Sensoren 4 und 22 der aus Stegen 3, Unterrahmen 5 und Oberrahmen 6 gebildeten Fläche anliegen. Beide Sensoren können durch den Greifbereich 1 gegenüberliegende Dichtelemente (nicht gezeigt) den Greifvorgang unterstützen. Die Stabilität des Stückguts wird dadurch erhöht, ein sicheres Greifen auch von Papierstapeln ist möglich.

Die Vorrichtung ist üblicherweise ein Teil eines Greifers, einer Transportvorrichtung oder Teil eines Transportsystems, in dem der Greifer im wesentlich fixiert und die Transportvehikel beweglich sind.

## Patentansprüche

1. Vorrichtung (100) zum Ergreifen von Stückgut (12), bestehend
a) aus einem dem Stückgut anpaßbaren Greifbereich (1), der wenigstens zwei Öffnungen (2) besitzt,
b) aus einem Unterdrucksystem (16), das über den anpaßbaren Greifbereich (1) mit dem Außenbereich (10) verbunden ist,
c) und aus wenigstens einem den Greifbereich (1) steuernden Sensorelement (4 oder 22),
wobei jede Öffnung (2)
(i) durch wenigstens eine Innenöffnung (14) mit dem Unterdrucksystem (16) und
(ii) durch wenigstens eine Außenöffnung (11) mit dem Außenbereich (10)
verbunden ist
und die Außenöffnung (11) oder die Außenöffnungen (11) mittels der Sensorelemente (4 und/oder 22) steuerbar ist/sind, wobei das Sensorelement oder die Sensorelemente (4 und/oder 22) im wesentlichen parallel und/oder quer zu den Öffnungen (2) angeordnet sind, dadurch gekennzeichnet,
(aa) daß die Öffnungen Kanäle (2) sind,
(bb) daß die Sensorelemente (4 und/oder 22) gegenüber dem Greifbereich (1) bewegbar sind und
(cc) daß das oder die Sensorelemente (4 und/oder 22) Tastvorrichtungen mit einer auf mechanischem Kontakt beruhenden Längenmessung sind, wodurch das oder die Sensorelemente (4 und/oder 22) die Größe und die Ausmaße des Stückgutes (12) erfassen.

2. Vorrichtung nach Anspruch 1, dadurch gekennzeichnet, daß das oder die Sensorelemente (4 und/oder 22) im wesentlichen quaderförmig sind.

3. Vorrichtung nach Anspruch 1 oder 2, dadurch gekennzeichnet, daß das oder die Sensorelemente (4 und/oder 22) dichtend dem Stückgut (12) anliegen.

4. Vorrichtung nach Anspruch 2 oder 3, dadurch gekennzeichnet, daß das oder die Sensorelemente (4 und/oder 22) im wesentlichen ein zu dem Stückgut (12) weisende Fläche, die im wesentlichen senkrecht zum Greifbereich (1) steht, besitzen.

5. Vorrichtung nach einem der vorherigen Ansprüche, dadurch gekennzeichnet, daß das oder die Sensorelemente (4) ein Größensensor oder Größensensoren (4) sind und im wesentlichen senkrecht zu den Kanälen (2) verlaufen und daß (i) die Größe der Außenöffnung (11) oder (ii) die Anzahl der Außenöffnungen pro Kanal (2) durch den oder die Größensensoren (4) steuerbar sind.

6. Vorrichtung nach Anspruch 5, dadurch gekennzeichnet, daß die Außenöffnungen (11) der Kanäle (2) wenigstens von einer Seite vorhangartig verschließbar sind.

7. Vorrichtung nach einem der Ansprüche 1 bis 4, dadurch gekennzeichnet, daß das oder die Sensorelemente (22) ein Anzahlsensor oder Anzahlsensoren (22) sind und im wesentlichen parallel zu den Kanälen (2) verlaufen, daß die Anzahl der geöffneten Innenöffnungen (14) durch den oder die Anzahlsensoren (22) steuerbar ist.

8. Vorrichtung nach Anspruch 7 kombiniert mit einem der Ansprüche 5 und 6, dadurch gekennzeichnet, daß der oder die Größensensoren (4) den Greifbereich (1) in einer Dimension und der oder die Anzahlsensoren (22) in einer weiteren zweiten Dimension steuern.

9. Vorrichtung nach Anspruch 8, dadurch gekennzeichnet, daß bei einzelnem Anzahlsensor (22) und einzelnem Größensensor (22) wenigstens einer neben seiner Bewegung senkrecht zur Sensorachse auch parallel zur Sensorachse bewegbar ist.

10. Vorrichtung nach einem der vorherigen Ansprüche, dadurch gekennzeichnet, daß das Unterdrucksystem (16) mit einer Saug- und Druckleitung (15) und gegebenenfalls mit dem umliegenden Bereich über steuerbare Ventile verbunden ist.

11. Vorrichtung nach einem der vorherigen Ansprüche, dadurch gekennzeichnet, daß wenigstens eine Seite des Greifbereichs (1) ein Dichtelement (13) besitzt, das an der von den Sensorelementen (4 oder 22) nicht eingenommenen Seite angeordnet ist.

12. Vorrichtung nach Anspruch 11, dadurch gekennzeichnet, daß das oder die Dichtelemente (13) als halbes Greifelement (17) oder halbe Greifelemente ausgestaltet sind.

## Claims

1. Device (100) for gripping part loads (12), consisting of
a) a gripping area (1) adjustable to the part load and having at least two openings (2)
b) a negative pressure system (16)
which is connected to the external area (10) via the adjustable gripping area (1)
c) and at least one sensor element (4 or 22) controlling the gripping area,
and it must be added that each opening (2) is connected
(i) to the negative pressure system (16) by at least one internal opening (14)
(ii) to the external area (10) by at least one external opening (11)
and the external opening (11) or the external openings (11) is/are to be controlled by means of the sensor elements (4 and/or 22); the sensor element or sensor elements (4 and/or 22) in this case are allocated for the most part parallel and/or at right angles to the openings (2),
characterized by the fact that
(aa) the openings are channels (2),
(bb) the sensor elements (4 and/or 22) are movable relative to the gripping area (1) and
(cc) that the sensor element or the sensor elements (4 and/or 22) is/are key-operated devices with a measurement of length based on mechanical contact, by means of which the sensor element or the sensor elements (4 and/or 22) record the size and dimensions of the part load (12).

2. Device according to claim 1, characterized by the fact that the sensor element or the sensor elements (4 and/or 22) is/are, for the most part,cuboidal.

3. Device according to claim 1 or 2, characterized by the fact that the sensor element or the sensor elements (4 and/or 22) is/are attached tightly to the part load (12), in a way of a sealing.

4. Device according to claim 2 or 3, characterized by the fact that the sensor element or the sensor elements (4 and/or 22) has/have, for the most part, a flat area directing to the part load, which is basically vertical to the gripping area (1).

5. Device according to one of the foregoing claims, characterized by the fact that the sensor element or the sensor elements (4) is a size sensor/are size sensors and, for the most part, run vertically to the channels(2) and that
(i) the size of the external opening (11) or
(ii) the number of external openings per channel(2) are controllable by means of the size sensor or size sensors (4).

6. Device according to claim 5, characterized by the fact that the external openings (11) of the tubes (2) can be closed as a curtain from at least one side.

7. Device according to one of the claims 1 to 4, characterized by the fact that the sensor element or the sensor elements (22) is a quantity sensor/are quantity sensors (22) and, for the most part, run parallel to the cannels (2), and that the number of open internal openings (14) can be controlled by the quantity sensor/quantity sensors (22).

8. Device according to claim 7 in combination with one of the claims 5 or 6, characterized by the fact that the size sensor/size sensors (4) control the gripping area (1) in one dimension and the quantity sensor/quantity sensors (22) in another second dimension.

9. Device according to claim 8, characterized by the fact that, in case of a single quantity sensor (22) and a single size sensor (22), at least one of them, in addition to its movement vertically to the sensor axle, is also movable parallel to the sensor axle.

10. Device according to one of the foregoing claims, characterized by the fact that the negative pressure system (16) is connected to a suction-air- and compressed-air line and, if necessary, to the surrounding area by means of controllable valves.

11. Device according to one of the foregoing claims, characterized by the fact that at least one side of the gripping area (1) has a sealing element, which is allocated to that side which is not occupied by the sensor elements (4 or 22).

12. Device according to claim 11, characterized by the fact that the tightening element/tightening elements (13) is/are shaped as half gripping element (13) or half gripping element.

## Revendications

1. Dispositif (100) pour saisir une marchandise isolée (12), se composant
a) d'un dispositif de préhension (1) adaptable à la marchandise isolée; ce dispositif possède au moins deux ouvertures,
b) d'un système de dépression (16) relié au dispositif extérieur par le dispositif de préhension adaptable,
c) et d'au moins un senseur (4 ou 22) commandant le dispositif de préhension (1),
et où chaque ouverture (2) est reliée
(i) avec le système de dépression (16) par au moins une ouverture intérieure (14) et
(ii) avec le dispositif extérieur (10) par au moins une ouverture extérieure (11)
et l'ouverture extérieure (11) ou les ouvertures extérieures (11) est/sont commandée(s) par des senseurs (4 et/ou 22), et où le ou les senseur(s) (4 et/ou 22) sont placés essentiellement parallèlement et/ou transversalement aux ouvertures (2),
caractérisé par,
(aa) des ouvertures en forme de conduits (2),
(bb) des senseurs (4 et/où 22) contissants rélatifs au dispositif de préhension (1) et
(cc) un ou des senseur(s) (4 et/où 22) qui sont des mécanismes à touches avec une longimètrie provenant d'un contact mécanique, par quoi le ou les senseur(s) (4 et/ou 22) enregistrent le volume et les dimensions de la marchandise isolée (12)

2. Dispositif selon l'exxigence 1, caractérisé par un ou des senseur(s) (4 et/ou 22) essentiellement de forme rectangulaire.

3. Dispositif selon les exigences 1 ou 2, caractérisé par un ou des senseur(s) (4 et/ou 22) se situant à de la marchandise isolée, d'une manière étanchante.

4. Dispositif selon les exigences 2 ou 3, caractérisé par un ou des senseur(s) (4 et/ou 22) possèdant essentiellement des surfaces indicatrices sur la marchandise isolée (12); l'une de ces surfaces est essentiellement perpendiculaire au dispositif de préhension (1).

5. Dispositif selon l'une des exigences précédentes, caractérisé par un ou des senseur(s) qui est/sont un ou des senseur(s) de volume et qui évolue(nt) essentiellement perpendiculairement aux conduits (2) et par la commande
(i) des dimensions des ouvertures extérieures (11) ou
(ii) du nombre d'ouvertures extérieures par conduit (2) au moyen du ou des senseur(s) de volume (4).

6. Dispositif selon l'exigence 5, caractérisé par des ouvertures extérieures (11) de conduits (2) se fermant en rideau au moins sur un coté.

7. Dispositif selon les exigences 1 à 4, caractérisé par un ou des senseur(s) (22) qui est/sont un ou des senseur(s) de quantité (22) et qui évolue(nt) essentiellement parallèlement aux conduits (2), par la commande du nombre d'ouvertures intérieures ouvertes (14) au moyen du ou des senseur(s) de quantité (22).

8. Dispositif selon l'exigence 7 et l'une des exigences 5 et 6, caractérisé par la commande du dispositif de préhension (1) dans une dimension au moyen du ou des senseur(s) de volume (22) et dans une autre deuxième dimension au moyen du ou des senseurs(s) de quantité (4).

9. Dispositif selon l'exigence 8, caractérisé par la mobilité d'au moins un senseur, que ce soit le senseur de quantité (22) ou le senseur de volume (22) déja mobiles perpendiculairement à leur axe, parallèlement à son axe.

10. Dispositif selon l'une des exigences précédentes, caractérisé par le raccordement du système de dépression (16) à une conduite d'aspiration et de pression (15) et si besoin au domaine environnant par une soupape commandable.

11. Dispositif selon l'une des exigences précédentes, caractérisé par la présence d'un élément hermétique/étanche (1) sur au moins un côté du dispositif de préhension (1); cet élément est disposé à la place non occupée par le senseur (4 ou 22).

12. Dispositif selon l'exigence 11, caractérisé par l'équipement comme semi(s)-élement(s) de préhension (17) du ou des élément(s) hermétique(s)/étanche(s)
